# EUROPÄISCHE PATENTSCHRIFT

(11) **EP 0 433 687 B1**
(45) Veröffentlichungstag und Bekanntmachung des Hinweises auf die Patenterteilung: **12.04.1995**
(21) Anmeldenummer: 90122266.1
(22) Anmeldetag: 22.11.1990
(51) Int. Cl.: H04N 9/79, H04N 7/00

(54) **Videorecorder zur Aufzeichnung und Wiedergabe von nach dem Letterbox-Verfahren übertragenen Videosignalen**
Videorecorder for recording and playing back video signals transmitted with the letter-box method
Enregistreur vidéo pour enregistrer et restituer des signaux vidéo transmis selon la méthode "letter-box"

(30) Priorität: 21.12.1989 DE 3942204
(43) Veröffentlichungstag der Anmeldung: 26.06.1991
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Kays, Rüdiger, Dr., Grundig E.M.V., W-8510 Fürth (DE)

(56) Entgegenhaltungen:
- WO-A-91/16793
- DE-C- 3 843 423
- FUNKSCHAU Bd. 25, Nr. 18, 31. August 1989, MUNCHEN DE Seiten 54 - 58 ZIEMER ET AL. 'die neuen wege des alten pal'
- FERNSEH- UND KINO-TECHNIK Bd. 43, Nr. 8, 31. August 1989, Seiten 407 - 410 ZIEMER UND AL. 'DER WEG ZU PAL-PLUS . EINE KOMPATIBLE VERBESSERUNG DES PAL-SYSTEMS'

## Beschreibung

Die Erfindung betrifft einen Videorecorder zur Aufzeichnung und Wiedergabe von nach dem Letterbox-Verfahren übertragenen Videosignalen.

Aus der DE-A- 34 02 796 ist ein Verfahren zur digitalen Verarbeitung von Videosignalen bekannt. Bei diesem Verfahren wird - um den Dynamikbereich des digitalisierten Videosignals vergrößern zu können - der Signalteil innerhalb der Austastlücke des Videosignals in den Spannungsbereich des Bildsignals verschoben.

Aus der DE-A- 33 15 740 ist ein Videorecorder zur Aufzeichnung eines Videotextsignals bekannt. Bei diesem Videorecorder wird das Leuchtdichtesignal durch Frequenzmodulation eines Bildträgers und das empfangene digitale Videotextsignal unmittelbar anstelle des Bildträgers aufgezeichnet.

Bei der Diskussion um zukünftige Fernsehsysteme muß unterschieden werden zwischen sog. HDTV-Systemen, welche mit einer höheren Zeilenzahl arbeiten als die heutigen Fernsehsysteme PAL, NTSC und SECAM und mit diesen nicht kompatibel sind, und verbesserten Fernsehsystemen, welche mit den heutigen Fernsehsystemen kompatibel sind.

Verbesserte kompatible Fernsehsysteme haben den Verteil, daß die heute auf dem Markt befindlichen Empfänger auch weiterhin verwendbar sind.

In der Zeitschrift "SMPTE-Journal", Januar 1989, S. 14-19, werden zwei Wege zur Realisierung eines verbesserten kompatiblen (NTSC)-Fernsehsystems aufgezeigt. Der erste Weg besteht im wesentlichen darin, Chrominanzinformation nur in jedem zweiten Vollbild zu übertragen und die dazwischen liegenden Vollbilder zur Übertragung von hochauflösender Luminanzinformation zu nutzen. Der zweite Weg besteht im wesentlichen darin, zur Bildverbesserung geeignete Zusatzinformationen in dunkelgetasteten Bereichen am oberen und unteren Bildrand zu übertragen. Ein verbesserter Empfänger besitzt Schaltungen, die diese Zusatzinformationen zum Erhalt eines Bildes mit verbesserter Vertikalauflösung auswerten. Mittels eines herkömmlichen Empfängers kann ein Bild dargestellt werden, welches am oberen und unteren Rand schwarze Balken aufweist.

Ferner ist aus der Zeitschrift "Funkschau", 1989, Heft 8, S. 56, der DE-C- 38 40 054 und der Zeitschrift "Fernseh- und Kino-Technik", 1989, Nr. 8, S. 407-410, ein Verfahren zur Realisierung eines PAL-Übertragungssystems bekannt, bei dessen Verwendung auf einem Breitbildempfänger ein Bild mit einem Bildbreiten- zu Bildhöhen-Verhältnis von 16 : 9 darstellbar ist, während auf einem herkömmlichen 4 : 3-Empfänger ein Bild mit am oberen und unteren Bildrand auftretenden dunklen Streifen dargestellt werden kann.

Dazu erfolgt bildquellenseitig eine Abtastung mit einem Raster entsprechend einem vergrößerten Bild-Seitenverhältnis von 16 : 9. Danach wird mittels eines Konverters die Zeilenzahl der sichtbaren Zeilen entweder durch Weglassen jeder 4. Zeile oder mittels eines Interpolationsvorganges von 575 auf 431 reduziert.

Diese verbleibenden 431 Zeilen werden spatial komprimiert und in einen symmetrisch zur Bildmitte liegenden Bereich eingesetzt. In die frei werdenden spatialen Räume am oberen und unteren Bildrand (jeweils 72 Zeilen) werden die im genannten Konverter abgesonderten Informationen, deren Amplituden bei den aus den oben genannten Literaturstellen "Funkschau" und "Fernseh- und Kino-Technik" bekannten Verfahren auf den Ultraschwarzbereich abgesenkt wurden und welche im folgenden als Zusatzsignale bezeichnet werden, eingesetzt. Das so erzeugte Signal wird über eine Übertragungsstrecke auf die Empfangsseite übertragen. Ein auf der Empfangsseite angeordneter 16 : 9-Empfänger weist eine Bildsignalverarbeitungsstufe auf, in welcher die symmetrisch zur Bildmitte übertragenen 431 Zeilen spatial dekomprimiert werden. Ferner werden in der Bildsignalverarbeitungsstufe die in jeweils 72 Zeilen am oberen und unteren Bildrand übertragenen Zusatzsignale abgetrennt und in zeitlich richtiger Reihenfolge in die spatial dekomprimierten 431 Zeilen eingefügt.

Weiterhin ist es aus der DE-C- 38 43 423 bekannt, die am oberen und unteren Bildrand übertragenen Informationen entweder mit reduziertem Modulationsgrad analog codiert zu übertragen, beispielsweise als Differenzsignal zwischen einer abgesonderten Zeile und einer räumlich oder zeitlich benachbarten Zeile, oder in Form von digitalen Stützinformationen zur Rekonstruktion abgesonderter Zeilen aus den sichtbar übertragenen Zeilen des gleichen und/oder des benachbarten Vollbildes. Durch ein derartiges Vorgehen soll die Sichtbarkeit der am oberen und unteren Bildrand übertragenen Informationen verringert und der Störabstand verbessert werden.

Ferner ist es aus der Anmeldung EP-A-0424655 (Veröffentlichungstag 02.05.91) der Anmelderin bekannt, daß bei einer Übertragung der am oberen und unteren Bildrand gelegenen Informationen im Ultraschwarzbereich Störungen der Synchronisation des Empfängers auftreten können, da sie von dessen Amplitudensiebschaltungen fälschlicherweise als Synchronimpulse interpretiert werden. Zur Lösung dieses Problems wird in der genannten Patentanmeldung vorgeschlagen, im Sender mittels einer Klemmschaltung den Schwarzpegel des Signals während der am oberen und unteren Bildrand liegenden Zeilen, in denen das Zusatzsignal ggfs. bandbegrenzt übertragen wird, auf beispielsweise 75 % der Maximalamplitude des Zeilensignals zu klemmen, wie es heute allgemein üblich ist, und während der in der Bildmitte übertragenen Zeilen beispielsweise auf 60 % der Maximalamplitude des Zeilensignals. Dadurch steht der Bereich zwischen 75 % und 60 % der Maximalamplitude des Zeilensignals für die Übertragung der am oberen und unteren Bildrand gelegenen Informationen zur Verfügung.

Schließlich ist es aus der Anmeldung EP-A-0432529 (Veröffentlichungstag 19.06.91) der Anmelderin bekannt, in den Randzeilen ausschließlich höherfrequente Informationen zu übertragen, um ein fehlerhaftes Arbeiten herkömmlicher Synchronsignalabtrennschaltungen zu vermeiden.

Ausgehend von den vorstehend beschriebenen Verfahren, die in der Fachwelt auch als Letterbox-Verfahren bezeichnet werden, liegt der Erfindung die Aufgabe zugrunde, einen Videorecorder der im Oberbegriff des Anspruchs 1 angegebenen Art derart weiterzubilden, daß auch nach dem Letterbox-Verfahren übertragene Videosignale mit hoher Qualität aufgezeichnet werden können.

Diese Aufgabe wird bei einem Videorecorder mit den im Oberbegriff des Anspruchs 1 angegebenen Merkmalen durch die im kennzeichnenden Teil des Anspruchs 1 angegebenen Merkmale gelöst. Vorteilhafte Ausgestaltungen ergeben sich aus den Unteransprüchen.

Die Vorteile der Erfindung bestehen insbesondere darin, daß durch die im Patentanspruch 1 beschriebenen Maßnahmen auch für die in den Randzeilen übertragenen Informationen die mittels des Videorecorders erzielbare Auflösung und der mittels des Videorecorders erzielbare Störabstand erreicht wird, was bei einer Aufzeichnung und Wiedergabe von im Utraschwarzbereich liegenden Signalen nicht der Fall wäre. Weitere vorteilhafte Eigenschaften der Erfindung ergeben sich aus der Erläuterung von Ausführungsbeispielen anhand der Figuren.

Es zeigt
- - Figur 1: ein Ausführungsbeispiel zur Erläuterung des Aufzeichnungsvorganges, und
- - Figur 2: ein Ausführungsbeispiel zur Erläuterung des Wiedergabevorganges.

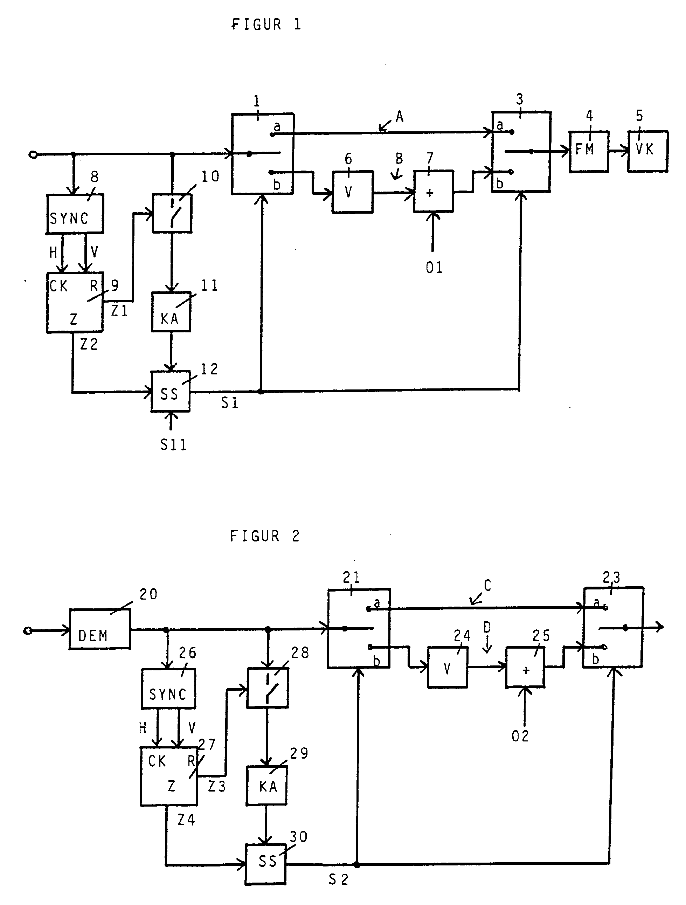

Die Figur 1 zeigt ein Ausführungsbeispiel zur Erläuterung des Aufzeichnungsvorganges. Dem Eingang der gezeigten Einrichtung wird ein nach dem Letterbox-Verfahren erzeugtes PAL-Videosignal zugeführt.

Dieses Videosignal hat 575 aktive Zeilen, von denen die 431 symmetrisch zur Bildmitte gelegenen Zeilen Bildinformationen in einem zwischen dem Schwarz- und dem Weißwert liegenden Amplitudenbereich und die am oberen und unteren Bildrand liegenden 72 Zeilen Zusatzinformationen in einem im Ultraschwarzbereich liegenden Amplitudenbereich aufweisen. Das dem Eingang der Einrichtung zugeführte Videosignal enthält ferner in einer Zeile der vertikalen Austastlücke ein Kennsignal dafür, daß es sich beim genannten Signal um ein nach dem Letterbox-Verfahren erzeugtes Videosignal handelt. Dieses Kennsignal, welches beispielsweise in der 13. Zeile nach dem Vertikalsynchronimpuls enthalten ist, besteht aus einem Wechsel zwischen dem Weiß- und dem Schwarzwert, welche jeweils für die Dauer einer halben Zeile übertragen werden, wie es in der Anmeldung EP-A-0424654 (Veröffentlichungstag 02.05.91) der Anmelderin beschrieben ist.

Dieses Videosignal wird einem Schalter 1, einer Synchronsignal-Abtrennschaltung 8 und einem Schalter 10 zugeführt. Die Klemme a des Schalters 1 ist mit einem ersten Signalweg A gekoppelt, dessen Ausgangssignal der Klemme a eines Schalters 3 zugeführt wird. Die Klemme b des Schalters 1 ist mit einem zweiten Signalweg B gekoppelt, welcher parallel zum ersten Signalweg liegt. Dieser zweite Signalweg enthält einen Verstärker 6 und einen Offset-Addierer 7, dessen Ausgangssignal der Klemme b des Schalters 3 zugeführt wird. Das Ausgangssignal des Schalters 3 wird in einem Frequenzmodulator 4 frequenzmoduliert und das frequenzmodulierte Signal von den rotierenden Videoköpfen einer Videokopfeinheit 5 in Schrägspuren eines Magnetbandes aufgezeichnet.

Die Schalter 1 und 3 werden von einem Steuersignal S1 derart gesteuert, daß sie sich für die Dauer der am oberen Bildrand liegenden 72 Zeilen und der am unteren Bildrand liegenden 72 Zeilen, in denen die Zusatzsignale übertragen werden, in der Schaltstellung b und für die Dauer der im mittleren Teil des Bildes übertragenen Videosignale in der Schaltstellung a befinden.

Folglich werden die im mittleren Teil des Bildes übertragenen Videosignale unbeeinflußt zum Frequenzmodulator 4 durchgelassen. Hingegen werden die in den Randzeilen übertragenen Zusatzsignale im Verstärker 6 verstärkt und im Offset-Addierer einer Offset-Spannung O1 überlagert, derart, daß die Zusatzsignale in einen zwischen dem Schwarz- und dem Weißwert liegenden Amplitudenbereich umgesetzt werden. Das Ausgangssignal des Offset-Addierers 7 wird über den Schalter 3 dem Frequenzmodulator 4 zugeführt.

Das Steuersignal S1 für die Schalter 1 und 3 wird auf folgende Weise erzeugt: Mittels der Synchronsignal-Abtrennschaltung 8 werden aus dem Eingangssignal die Horizontalsynchronimpulse H und die Vertikalsynchronimpulse V abgetrennt. Die Vertikalsynchronimpulse V werden dem Rücksetzeingang R und die Horizontalsynchronimpulse H dem Zähleingang CK einer Zählschaltung 9 zugeführt. Die Zählschaltung 9 liefert an einem Ausgang Z1 ein die Kennsignalzeile markierendes Signal. In Ansprache auf dieses Signal wird der Schalter 10 für die Dauer der Kennsignalzeile durchlässig geschaltet. Folglich wird das in der Kennsignalzeile übertragene Signal einer Kennsignal-Auswerteschaltung 11 zugeführt. Eine mögliche Ausgestaltung einer derartigen Kennsignal-Auswerteschaltung ist in der bereits oben angeführten Patentanmeldung EP-A-0424654 beschrieben.

Das Ausgangssignal der Kennsignal-Auswerteschaltung 11, welches Auskunft darüber gibt, ob das Eingangssignal ein nach dem Letterbox-Verfahren erzeugtes Videosignal ist oder nicht, wird einer Schaltersteuerung 12 zugeführt. Der Schaltersteuerung 12 wird weiterhin ein an einem Ausgang Z2 der Zählschaltung 9 zur Verfügung stehendes Zählsignal zugeführt, welches Auskunft über die aktuelle Zeilennummer gibt.

Handelt es sich beim Eingangssignal um ein nach dem Letterbox-Verfahren erzeugtes Videosignal, dann erzeugt die Schaltersteuerung 12 - wie es bereits oben beschrieben wurde - ein Steuersignal S1, aufgrund dessen die im mittleren Teil des Bildes übertragenen Videosignale über den Signalweg A und die in den Randzeilen übertragenen Zusatzinformationen über den Signalweg B geleitet werden. Handelt es sich beim Eingangssignal hingegen um ein herkömmliches Videosignal, dann erzeugt die Schaltersteuerung 12 ein Steuersignal, aufgrund dessen sämtliche Zeilen des Videosignals über den Signalweg A geleitet werden.

Die Figur 2 zeigt ein Ausführungsbeispiel zur Erläuterung des Wiedergabevorganges. Dem Eingang der gezeigten Einrichtung wird das vom Magnetnband mittels der Videokopfeinheit wiedergegebene, frequenzmodulierte Signal zugeführt. Dieses Signal wird in einem Frequenzdemodulator 20 demoduliert. Das demodulierte Signal wird einem Schalter 21, einer Synchronsignal-Abtrennschaltung 26 und einem Schalter 28 zugeführt. Die Klemme a des Schalters 21 ist mit einem ersten Signalweg C gekoppelt, dessen Ausgangssignal der Klemme a eines Schalters 23 zugeführt wird. Die Klemme b des Schalters 21 ist mit einem zweiten Signalweg D gekoppelt, welcher parallel zum ersten Signalweg liegt. Dieser zweite Signalweg enthält einen Verstärker 24 und einen Offset-Addierer 25, dessen Ausgangssignal der Klemme b des Schalters 23 zugeführt wird. Das Ausgangssignal des Schalters 23 wird den herkömmlichen weiteren Schaltungen des Videorecorders zugeführt.

Die Schalter 21 und 23 werden von einem Steuersignal S2 derart gesteuert, daß sie sich für die Dauer der am oberen Bildrand liegenden 72 Zeilen und der am unteren Bildrand liegenden 72 Zeilen, in denen die Zusatzinformationen übertragen werden, in der Schaltstellung b und für die Dauer der im mittleren Teil des Bildes übertragenen Videosignale in der Schaltstellung a befinden.

Folglich werden die im mittleren Teil des Bildes übertragenen Videosignale unbeeinflußt zum Ausgang der in Figur 2 gezeigten Einrichtung durchgelassen. Hingegen werden die in den Randzeilen übertragenen Zusatzsignale im Verstärker 24 verstärkt und im Offset-Addierer 25 einer Offset-Spannung O2 überlagert, derart, daß die Zusatzsignale in einen im Ultraschwarzbereich liegenden Amplitudenbereich rückumgesetzt werden. Das Ausgangssignal des Offset-Addierers 25 wird über den Schalter 23 dem Ausgang der in der Figur 2 gezeigten Einrichtung zugeführt.

Das Steuersignal S2 für die Schalter 21 und 23 wird auf folgende Weise erzeugt: Mittels der Synchronsignal-Abtrennschaltung 26 werden aus dem Ausgangssignal des Frequenzdemodulators 20 die Horizontalsynchronimpulse H und die Vertikalsynchronimpulse V abgetrennt. Die Vertikalsynchronimpulse V werden dem Rücksetzeingang R und die Horizontalsynchronimpulse H dem Zähleingang CK einer Zählschaltung 27 zugeführt. Die Zählschaltung 27 liefert an einem Ausgang Z3 ein die Kennsignalzeile markierendes Signal. In Ansprache auf dieses Signal wird der Schalter 28 für die Dauer der Kennsignalzeile durchlässig geschaltet. Folglich wird das in der Kennsignalzeile übertragene Signal einer Kennsignal-Auswerteschaltung 29 zugeführt. Eine mögliche Ausgestaltung einer derartigen Kennsignal-Auswerteschaltung ist in der bereits oben angeführten Patentanmeldung EP-A-0424654 beschrieben.

Das Ausgangssignal der Kennsignal-Auswerteschaltung 29, welches Auskunft darüber gibt, ob das Ausgangssignal des Demodulators 20 ein nach dem Letterbox-Verfahren erzeugtes Videosignal ist oder nicht, wird einer Schaltersteuerung 30 zugeführt. Der Schaltersteuerung 30 wird weiterhin ein an einem Ausgang Z4 der Zählschaltung 27 zur Verfügung stehendes Zählsignal zugeführt, welches Auskunft über die aktuelle Zeilennummer gibt.

Handelt es sich beim Ausgangssignal des Demodulators 20 um ein nach dem Letterbox-Verfahren erzeugtes Videosignal, dann erzeugt die Schaltersteuerung 30 - wie es bereits oben beschrieben wurde - ein Steuersignal S2, aufgrund dessen die im mittleren Teil des Bildes übertragenen Videosignale über den Signalweg C und die in den Randzeilen übertragenen Zusatzsignale über den Signalweg D geleitet werden. Handelt es sich beim Ausgangssignal des Demodulators 20 hingegen um ein herkömmliches Videosignal, dann erzeugt die Schaltersteuerung 30 ein Steuersignal, aufgrund dessen sämtliche Zeilen des Videosignals über den Signalweg C geleitet werden.

Beim vorstehend beschriebenen Videorecorder werden die in den Randzeilen im Ultraschwarzbereich übertragenen Zusatzsignale eines nach dem Letterbox-Verfahren erzeugten Videosignals für den Aufzeichnungs- und Wiedergabevorgang in einen zwischen dem Schwarz- und dem Weißwert liegenden Amplitudenbereich umgesetzt. Dadurch wird auch für die in den Randzeilen übertragenen Zusatzsignale dieselbe Auflösung erzielt wie für die im mittleren Teil des Bildes übertragenen Signale. Ferner wird bei einem derartigen Vorgehen der Rauschabstand der in den Randzeilen übertragenen Zusatzsignale nicht unnötig verschlechtert, wie es bei einer Aufzeichnung im Ultraschwarzbereich liegender Signale der Fall wäre.

Gemäß einer vorteilhaften Ausgestaltung weist der beanspruchte Videorecorder eine Betriebsart auf, in der der "Letterbox-Mode" durch einen mittels der Bedieneinheit des Videorecorders eingegebenen Befehl zwangsweise ausgeschaltet werden kann. Ein in Ansprache auf den genannten Befehl erzeugtes Steuersignal S11 wird zum einen der Schaltersteuerung 12 zugeführt, die daraufhin die Schalter 1 und 3 derart ansteuert, daß sämtliche Zeilen des Videosignals über den Signalweg A geleitet werden. Weiterhin kann in Ansprache auf den genannten Befehl das im Videosignal enthaltene Kennsignal gelöscht werden, so daß wiedergabeseitig sämtliche Zeilen des Videosignals über den Signalweg C geleitet werden. Diese Ausgestaltung ist insbesondere dann von Vorteil, wenn dem Benutzer des Videorecorders ausschließlich ein Bildschirm mit einem Bildseitenverhältnis von 4:3 zur Verfügung steht.

Gemäß einer weiteren vorteilhaften Ausgestaltung weist der beanspruchte Videorecorder eine (nicht gezeichnete) Schaltung zur Generierung eines zweiten Kennsignals zur Kennzeichnung eines nach dem Letterbox-Verfahren erzeugten Videosignals auf. Diese Schaltung wird von der Kennsignal-Auswerteschaltung 11 dann angesteuert, wenn letztere ein im Videosignal enthaltenes erstes Kennsignal identifiziert hat. Damit kann dem Umstand Rechnung getragen werden, daß ein im Videosignal enthaltenes erstes Kennsignal zur magnetischen Aufzeichnung - beispielsweise wegen eines nicht ausreichenden Fehlerschutzes - nicht geeignet ist. Dieses zweite Kennsignal wird auf dem Magnetband aufgezeichnet.

Hierzu gibt es verschiedene Möglichkeiten:
- das zweite Kennsignal wird in einer nicht sichtbaren Zeile der vertikalen Austastlücke mittels der Videokopfeinheit 5 frequenzmoduliert aufgezeichnet, oder
- das zweite Kennsignal wird mittels eines Steuerspurkopfes durch Impulsbreitenmodulation der Steuerspur- bzw. CTL-Impulse aufgezeichnet, oder
- das zweite Kennsignal wird als digitales Signal - beispielsweise zusammen mit dem Tonsignal - in einem eigenen Aufzeichnungskanal verarbeitet und in den Videoschrägspuren nach dem Tiefen-Multiplex-Verfahren oder an deren Ende aufgezeichnet.

Ein derartig aufgezeichnetes zweites Kennsignal steht dann wiedergabeseitig zur Verfügung und wird anstelle des im Videosignal enthaltenen ersten Kennsignals der Schaltersteuerung 30 zugeführt.

## Patentansprüche

1. Videorecorder mit
- einem Frequenzmodulator (4) zur Frequenzmodulation des Videosignals,
- einer Videokopfeinheit (5) zur Aufzeichnung und Wiedergabe des frequenzmodulierten Videosignals auf ein bzw. von einem Aufzeichnungsträger, und
- einem Frequenzdemodulator (20) zur Demodulation des vom Aufzeichnungsträger wiedergegebenen Signals,
**dadurch gekennzeichnet,** daß er zur Aufzeichnung und Wiedergabe eines n-zeiligen Videosignals, welches in n-x Zeilen Bildinformationen in einem zwischen dem Schwarz- und dem Weißwert liegenden Amplitudenbereich und in x Zeilen Zusatzsignale in im Ultraschwarzbereich liegenden Amplitudenbereich enthält, weiterhin
- aufzeichnungsseitig erste Schaltungsmittel (6, 7) zur Umsetzung der Amplituden der Zusatzsignale in einen zwischen dem Schwarz- und dem Weißwert liegenden Amplitudenbereich, und
- wiedergabeseitig zweite Schaltungsmittel (24, 25) zur Rückumsetzung der Amplituden der Zusatzsignale in den Ultraschwarzbereich aufweist.

2. Videorecorder nach Anspruch 1, **dadurch gekennzeichnet,** daß die ersten und zweiten Schaltungsmittel (6, 7, 24, 25) jeweils einen Verstärker (6, 24) und einen Offset-Addierer (7, 25) enthalten.

3. Videorecorder nach Anspruch 1 oder 2, **dadurch gekennzeichnet,** daß er aufzeichnungs- und wiedergabeseitig jeweils eine Parallelschaltung zweier Signalwege (A, B bzw. C, D) aufweist, über deren ersten die in den n-x Zeilen enthaltenen Bildinformationen und über deren zweiten die x Zeilen Zusatzsignale geleitet werden, wobei jeweils der zweite Signalweg (B bzw. D) die Schaltungsmittel zur Umsetzung (6, 7) bzw. Rückumsetzung (24, 25) der Amplituden der Zusatzsignale enthält.

4. Videorecorder nach Anspruch 3, **dadurch gekennzeichnet,** daß er aufzeichnungsseitig
- eine Schaltung (8) zur Abtrennung der Horizontalsynchronimpulse (H) und der Vertikalsynchronimpulse (V) aus dem Videosignal,
- eine Zählschaltung (9), deren Rücksetzeingang (R) die Vertikalsynchronimpulse (V) und deren Zähleingang (CK) die Horizontalsynchronimpulse (H) zugeführt werden, und
- eine mit einem Ausgang der Zählschaltung (9) verbundene Schaltersteuerung (12) aufweist, deren Ausgangssignal zur Umschaltung zwischen dem ersten und dem zweiten Signalweg (A bzw. B) verwendet wird.

5. Videorecorder nach Anspruch 3 oder 4, **dadurch** **gekennzeichnet,** daß er wiedergabeseitig
- eine Schaltung (26) zur Abtrennung der Horizontalsynchronimpulse (H) und der Vertikalsynchronimpulse (V) aus dem wiedergegebenen Signal,
- eine Zählschaltung (27), deren Rücksetzeingang (R) die Vertikalsynchronimpulse (V) und deren Zähleingang (CK) die Horizontalsynchronimpulse (H) zugeführt werden, und
- eine mit einem Ausgang der Zählschaltung (27) verbundene Schaltersteuerung (30) aufweist, deren Ausgangssignal zur Umschaltung zwischen dem ersten und dem zweiten Signalweg (C bzw. D) verwendet wird.

6. Videorecorder nach Anspruch 4 oder 5, **dadurch gekennzeichnet,** daß er eine Auswerteschaltung (11 bzw. 29) zur Auswertung eines im Videosignal enthaltenen Kennsignals aufweist und daß das Ausgangssignal der Auswerteschaltung (11 bzw. 29) der Schaltersteuerung (12 bzw. 30) zugeführt wird.

7. Videorecorder nach Anspruch 4, 5 oder 6, **dadurch gekennzeichnet,** daß der Schaltersteuerung (12) ein Bedienbefehl (S11) zugeführt wird und die Schaltersteuerung (12) in Ansprache auf diesen Bedienbefehl ein Steuersignal erzeugt, aufgrund dessen sämtliche Zeilen des Videosignals über den ersten Signalweg (A) geleitet werden.

8. Videorecorder nach einem oder mehreren der vorhergehenden Ansprüche, **dadurch gekennzeichnet,** daß er weiterhin eine von der Kennsignal-Auswerteschaltung (11) angesteuerte Schaltung zur Generierung eines zweiten Kennsignals hat, welches auf dem Magnetband aufgezeichnet wird.

## Claims

1. Video recorder having
- a frequency modulator (4) for frequency modulation of the video signal,
- a video head unit (5) for recording and reproduction of the frequency-modulated video signal onto and respectively from a recording medium, and
- a frequency demodulator (20) for demodulation of the signal reproduced from the recording medium,
characterized in that, for recording and reproduction of an n-line video signal which contains vision information in n-x lines in an amplitude range lying between the black level and the white level, and contains additional signals in x lines in an amplitude range lying in the ultra-black region, furthermore has
- first switching means (6, 7) on the recording side for conversion of the amplitudes of the original signals into an amplitude range lying between the black level and the white level,
- second switching means (24, 25) on the reproduction side for reverse conversion of the amplitudes of the additional signals into the ultra-black range.

2. Video recorder according to Claim 1, characterized in that the first and second switching means (6, 7, 24, 25) each contain an amplifier (6, 24) and an offset adder (7, 25).

3. Video recorder according to Claim 1 or 2, characterized in that, on the recording side and the reproduction side, it has in each case one parallel circuit of two signal paths (A, B and C, D respectively), via the first of which the vision information contained in the n-x lines is passed and via the second of which the x lines of additional signals are passed, the second signal path (B or D respectively) in each case containing the switching means for conversion (6, 7) and, respectively, reverse conversion (24, 25) of the amplitudes of the additional signals.

4. Video recorder according to Claim 3, characterized in that, on the recording side, it has
- a circuit (8) for separating the horizontal synchronization pulses (H) and the vertical synchronization pulses (V) from the video signal,
- a counting circuit (9), to whose reset input (R) the vertical synchronization pulses (V) are fed and to whose counting input (CK) the horizontal synchronization pulses (H) are fed, and
- a switch controller (12) which is connected to the output of the counting circuit (9) and whose output signal is used for switching over between the first signal path and the second signal path (A and B respectively).

5. Video recorder according to Claim 3 or 4, characterized in that, on the reproduction side, it has
- a circuit (26) for separating the horizontal synchronization pulses (H) and the vertical synchronization pulses (V) from the reproduced signal,
- a counting circuit (27) to whose reset input (R) the vertical synchronization pulses (V) are fed and to whose counting input (CK) the horizontal synchronization pulses (H) are fed, and
- a switch controller (30) which is connected to the output of the counting circuit (27) and whose output signal is used for switching over between the first signal path and the second signal path (C and D respectively).

6. Video recorder according to Claim 4 or 5, characterized in that it has an evaluation circuit (11 or 29 respectively) for evaluation of an identification signal which is contained in the video signal, and in that the output signal from the evaluation circuit (11 or 29 respectively) is fed to the switch controller (12 or 30 respectively).

7. Video recorder according to Claim 4, 5 or 6, characterized in that a control command (S11) is fed to the switch controller (12), and the switch controller (12) produces a control signal in response to this control command, on the basis of which control signal all the lines in the video signal are passed via the first signal path (A).

8. Video recorder according to one or more of the preceding claims, characterized in that it furthermore has a circuit which is driven by the identification signal evaluation circuit (11) in order to generate a second identification signal which is recorded on the magnetic tape.

## Revendications

1. Enregistreur vidéo comportant
- un modulateur de fréquence (4) pour réaliser la modulation de fréquence du signal vidéo,
- une unité de tête vidéo (5) pour l'enregistrement et la reproduction du signal vidéo modulé en fréquence sur ou à partir d'un support d'enregistrement, et
- un démodulateur de fréquence (20) pour démoduler le signal reproduit à partir du support d'enregistrement,
caractérisé par le fait qu'il contient, pour l'enregistrement et la reproduction d'un signal vidéo à n lignes, qui contient, dans n-x lignes, des informations d'image dans une gamme d'amplitudes située entre la valeur du noir et la valeur du blanc, et, dans x lignes, des signaux supplémentaires dans la gamme d'amplitudes située dans la zone de l'ultranoir, et en outre
- côté enregistrement, des premiers moyens de circuits (6, 7) pour convertir les amplitudes des signaux supplémentaires dans une gamme d'amplitudes située entre la valeur du noir et la valeur du blanc, et
- côté reproduction, des seconds moyens de circuits (24, 25) pour la conversion en retour des amplitudes des signaux supplémentaires, dans la gamme de l'ultranoir.

2. Enregistreur vidéo selon la revendication 1, caractérisé en ce que les premiers et seconds moyens de circuits (6,7,24,25) contiennent respectivement un amplificateur (6,24) et un additionneur d'offset (7,25).

3. Enregistreur vidéo selon la revendication 1 ou 2, caractérisé en ce qu'il comporte, côté enregistrement et côté reproduction, respectivement un branchement en parallèle de deux voies de transmission de signaux (A,B et C,D), par l'intermédiaire de la première desquelles sont transmises des informations d'image contenues dans les n-x lignes, et par l'intermédiaire de la seconde desquelles sont transmis les signaux supplémentaires contenus dans les x lignes, respectivement la seconde voie de transmission de signaux (B ou D) contenant les moyens de circuit pour convertir (6,7) ou convertir en retour (24,25) les amplitudes des signaux supplémentaires.

4. Enregistreur vidéo selon la revendication 3, caractérisé en ce qu'il contient côté enregistrement
- un circuit (8) pour séparer les impulsions de synchronisation horizontale (H) et les impulsions de synchronisation verticale (V) à partir du signal vidéo,
- un circuit de comptage (9), à l'entrée de remise à zéro (R) duquel sont envoyées les impulsions de synchronisation verticale (V), et à l'entrée de comptage (CK) duquel sont envoyées les impulsions de synchronisation horizontale (H), et
- un circuit de commande (12), qui est relié à une sortie du circuit de comptage (9) et dont le signal de sortie est utilisé pour réaliser la commutation entre les première et seconde voies de transmission de signaux (A et B).

5. Enregistreur vidéo selon la revendication 3 ou 4, caractérisé en ce qu'il comporte, sur le côté reproduction,
- un circuit (26) pour séparer les impulsions de synchronisation horizontale (H) et les impulsions de synchronisation verticale (V) à partir du signal reproduit,
- un circuit de comptage (27), à l'entrée de remise à zéro (R) duquel sont envoyées les impulsions de synchronisation verticale (V) et à l'entrée de comptage (CK) duquel sont envoyées les impulsions de synchronisation horizontale (H), et
- une unité (30) de commande de commutateurs, qui est reliée à la sortie du circuit de comptage (27) et dont le signal de sortie est utilisé pour réaliser la conversion entre les première et seconde voies de transmission de signaux (C ou D).

6. Enregistreur vidéo selon la revendication 4 ou 5, caractérisé en ce qu'il comporte un circuit d'évaluation (11 ou 29) pour l'évaluation d'un signal caractéristique contenu dans le signal vidéo, et que le signal de sortie du circuit d'évaluation (11 ou 29) est envoyé au circuit (12 ou 30) de commande de commutateur.

7. Enregistreur vidéo selon la revendication 4, 5 ou 6, caractérisé en ce qu'une instruction de commande (S11) est envoyée à l'unité (12) de commande de commutateur et que l'unité (12) de commande de commutateurs produit, en réponse à cette instruction de commande, un signal de commande, sur la base duquel toutes les lignes du signal vidéo sont envoyées par l'intermédiaire de la première voie de transmission de signaux (A).

8. Enregistreur vidéo selon une ou plusieurs des revendications précédentes, caractérisé en ce qu'il contient en outre un circuit, qui est commandé par le circuit (11) d'évaluation de signaux caractéristiques, pour la production d'un second signal caractéristique, qui est enregistré sur la bande magnétique.
